# EUROPEAN PATENT APPLICATION

(11) **EP 1 350 916 A2**
(43) Date of publication of application: **08.10.2003**
(21) Application number: 03252028.0
(22) Date of filing: 31.03.2003
(51) Int. Cl.: E06B 9/02, F16G 11/00

(54) **Tensioning apparatus for a security closure**

(30) Priority: 04.04.2002 GB 0207823
(71) Applicant: SPS (HOLDINGS) LTD., Glasgow G1 2RX (GB)
(72) Inventor: Duffus, Alex M., c/o SPS (Holdings) Limited, Glasgow G1 2RX (GB)
(74) Representative: Leeming, John Gerard

(57) **Abstract**

A tensioning apparatus for use in a security apparatus (12) including a panel having a plurality of polygonal apertures (15), a connecting member passing through one of the apertures and cooperating directly or indirectly with the surround of the door or window opening (11). The tensioning apparatus comprising a clamp (61) for use in coarse tensioning and a threaded bolt (62) screw-threaded to the clamp (61) for fine tensioning.

## Description

The present invention relates to a tensioning apparatus for a security closure for use in particular in windows, doors and like openings in temporarily unoccupied premises

Property which is temporarily vacant for one reason or another, for example, during building renovation or between tenancies is being increasingly subjected to damage due to theft and vandalism. Early attempts to protect such a property involved securing wooden or reinforced panels to the outer skin of the building around the opening. The means of fixing the panels could be easily accessible from the outside and so lack security.

It has been proposed in our European Patent No. 0 496 616 to provide a security closure for a door or window opening which is in the form of a panel of sheet material in which are formed a plurality of apertures and for there to be at least two elongate pin members, each pin member having a blank head, the pin members each passing through a separate one of the apertures with the head thereof in individual abutting engagement with the outer face of the panel. A connecting member, such as a wire or an integral bolt is formed integrally with or connected to the pin on the side thereof inside the inner face to cooperate directly or indirectly with the surround of the door or window opening, whereby tensioning of the connecting member will pull the panel into the opening.

In our patent GB 2 278 872 a connecting member for use in such security closures is described. The connecting member has a smooth, blank head which abuts the outer face of the panel. A wire is fed into a blind bore of the body of the connecting member and secured by swaging a shoulder of the body into a non-circular shape which engages with one of the apertures.

Such security closures for doors and windows have been found very satisfactory in guarding void buildings because it is very difficult for a prospective vandal to attack successfully such a security closure.

However, the tensioning apparatus in such security enclosures are intricate and time consuming to operate. It is therefore an aim of the present invention to provide an easy to operate tensioning apparatus for use in such security closures.

According to the present invention, there is provided a security closure including a panel having a plurality of apertures therein, and a tensioning apparatus for tensioning a connecting member passing through one of said apertures and cooperating directly or indirectly with the surround of a door or window opening whereby tensioning of the connecting member pulls the panel into the door or window opening, said tensioning apparatus comprising:
a quick release clamp for coarse tensioning of the flexible member comprising:
   a set of gripping jaws, one jaw of which is a spring loaded lever, the spring urging the jaw into a closed position;
   a pivot for said spring loaded jaw; and
   a threaded tube through which the flexible member passes;
a threaded bolt for fine tensioning of the flexible member through which the flexible member passes and which is threaded onto said threaded tube.

Such a structure is found to be considerably faster and easier to operate than conventional tensioning devices, and will result in labour savings.

Preferably the bolt head is polygonal to engage with the apertures formed in the panel and the movable jaw comprises metal teeth to grip the flexible member. The tensioning apparatus should preferably include a nut screw-threaded to the threaded bolt to prevent inadvertent loosening of the device.

In order that the present invention may more readily be understood, the following description is given, merely by way of example, reference being made to the accompanying drawings in which:
Figure 1 is a schematic exploded of one embodiment of security closure suitable for utilizing a tensioning apparatus according to the invention, the security closure being demonstrated fitted into a window opening;
Figure 2 is a schematic side elevation of a security closure of figure 1 illustrating in more detail the tensioning apparatus of figure 1.

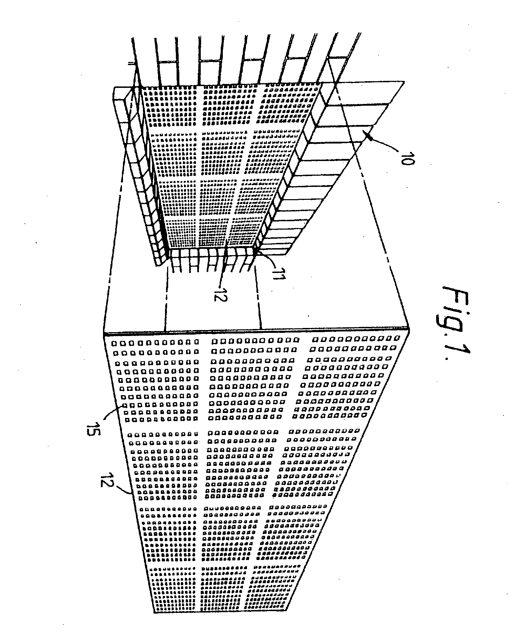

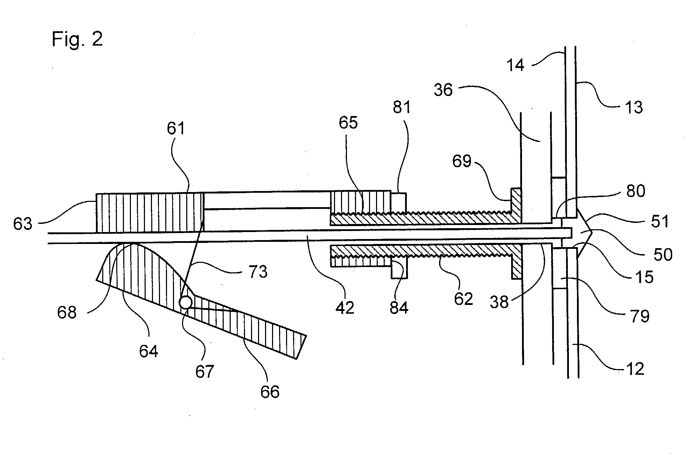

Figure 1 illustrates a wall 10 having a window opening 11 therein and a security panel 12 as in European Patent 0 496 616, mounted within the window opening 11 completely to fill that opening. Panel 12 has a front and a rear face 13 and 14 respectively (figure 2) and is perforated with square cross-section apertures 15 extending between the front and the rear faces. Figure 2 shows a conventional window or door frame member 36. When it is decided to secure a panel 12 in place, a hole 38 is bored at each of a number of locations around the frame, the holes being drilled accurately to be aligned with certain of the apertures 15. Passed through the apertures 15 and the aligned holes 38 are connecting members as in GB Patent 2 278 872. These connecting members comprise a steel wire 42 formed integrally with a pin 50 with a head 51 which abuts the front face 13 of the security panel 12. The connecting member is then tensioned by the tensioning apparatus according to the present invention.

The tensioning apparatus comprises a clamping part 61 and a threaded bolt 62. The threaded bolt has a bore through which the steel wire 42 passes. The clamping part 61 has a stationary jaw 63, a movable jaw 64 and a threaded tube 65 through which the steel wire 42 also passes. The threaded tube 65 has a radius such that the threaded bolt 62 can be threaded onto the threaded tube. The movable jaw 64 has a gripping surface 68 and is operated by a lever 66 around a pivot 67. The movable jaw is spring loaded to be urged into a closed position. The gripping surface has metal teeth with which to grip the steel wire 42.

To tension the steel wire 42 the lever 66 is depressed, raising the gripping surface 68 of the movable jaw 64 from the stationary jaw 63. The tensioning apparatus is then moved relative to the steel wire 42 towards the window or door frame member 36. This draws the panel 12 towards the window or door frame member 36. When the bolt head 69 abuts the window or door frame member 36 the lever 66 is released, clamping the steel wire 42 between the stationary jaw 63 and the movable jaw 64. Fine tensioning of the wire is achieved by rotation of the threaded bolt 62 relative to the clamping part 61.

To release the tension from the steel wire 42 the lever 66 is depressed and the tensioning apparatus moved away from the abutting surface 18. This one step release process enables faster dismantling of the security closure.

The jaws 63, 64 are the opposite side of the pivot to the panel so that when the panel 12 is pulled away from window or door frame member 36, the metal teeth will grip the connecting member 42 harder.

The clamping part comprises two side walls, a cross member forming one of the jaws between said side walls wherein the pivot is between said side walls and the spring is a torsion spring 73.

A nylon spacer 79 can be provided between the panel 12 and the wall 10. The nylon spacer has an aperture 80 through with the steel wire 42 passes.

In a further embodiment of the present invention a lock nut 81 is threaded onto the threaded bolt 62. When the steel wire 42 has been tensioned the nut 81 is brought into close contact with the end of the threaded tube 84 to prevent any inadvertent loosening of the threaded bolt 62 relative to the clamping part 61.
The tensioning apparatus of the invention may be utilized in the same manner as shown in Figure 2 of European Patent 0 496 616 or GB Patent 2 278 872.

## Claims

1. A security closure including a panel having a plurality of apertures therein, and a tensioning apparatus for tensioning a connecting member passing through one of said apertures and cooperating directly or indirectly with the surround of a door or window opening whereby tensioning of the connecting member pulls the panel into the door or window opening, said tensioning apparatus comprising:
a quick release clamp for coarse tensioning of the flexible member comprising:
a set of gripping jaws, one jaw of which is a spring loaded lever, the spring urging the jaw into a closed position;
a pivot for said spring loaded jaw; and
a threaded tube through which the flexible member passes;
a threaded bolt for fine tensioning of the flexible member through which the flexible member passes and which is threaded onto said threaded tube.

2. A security closure according to claim 1, wherein the jaws are the opposite side of the pivot to the panel.

3. A tensioning apparatus according to any one of the preceding claims, wherein the spring loaded jaw comprises a gripping surface with metal teeth.

4. A tensioning apparatus according to any one of the preceding claims, further comprising a lock nut threaded onto the threaded bolt.

5. A security closure according to any one of the preceding claims, wherein the quick release clamp comprises two side walls; a cross member forming one of the jaws between said side walls; said pivot between said side walls and said spring is a torsion spring.
